# EUROPEAN PATENT APPLICATION

(11) **EP 4 663 436 A1**
(43) Date of publication of application: **17.12.2025**
(21) Application number: 25178459.1
(22) Date of filing: 23.05.2025
(51) Int. Cl.: B60D 1/64, B62D 53/12

(54) **MOUNTING BOX FOR BEING MOUNTED ON A TRAILER FRONT FOR ESTABLISHING A CONNECTION BETWEEN A TOWING VEHICLE AND A TRAILER VEHICLE**

(30) Priority: 12.06.2024 US 202418741307
(71) Applicant: ZF CV Systems Global GmbH, 3006 Bern (CH)
(72) Inventor: GOERS, Andreas, 30982 Pattensen (DE); Schmid, Andreas, Westpoint, 47992 (US); Christel, Jens, 30171 Hannover (DE); Hahn, Wolfgang, Bloomfield Hills, 48302 (US)
(74) Representative: Ohlendorf, Henrike

(57) **Abstract**

The invention relates to a mounting box (40) for being mounted on a trailer front (36). The mounting box (40) extends along a width, a height and a length (48) and is limited by a front surface (42) comprising a flat or curved alignment area (46). The alignment area (46) extends in the length (48) of the mounting box (40) and measures at least 1 m, at least 1,5 m or at least 2 m in a length direction (50) defined by the length (48) of the mounting box (40). The mounting box (40) comprises a connection section (57), wherein the connection section (57) comprises a plurality of box connectors (56) fixedly mounted on the mounting box (40) for providing an electrical, pneumatic or hydraulic connection with corresponding truck connectors (23). The connection section (57) is arranged above or below the alignment area (46) in a height direction (66) defined by the height of the mounting box, so that the alignment area (46) provides a continuous surface which is uninterrupted by the box connectors (56).

## Description

The invention relates to the field of commercial vehicles and in particular to trailer vehicles. A towing vehicle is used to couple and move a trailer vehicle, which in particular can be configured as a commercial vehicle. Towing vehicles, like trucks, are also configured as commercial vehicles. Towing vehicles referred to herein may in particular be semitrailer tractors, which are also referred to as trucks. Trailer vehicles referred to herein may in particular be semitrailers, which are also referred to as trailers.

According to the prior art, several connections are predominantly made when coupling or uncoupling a trailer vehicle to a towing vehicle. Usually, a mechanical connection, which can also be called a towing connection, is first realized between the towing vehicle and the trailer vehicle with the aid of a mechanical coupling. In the case of a towing vehicle configured as a semitrailer tractor, the part of the coupling of the towing vehicle comprises a fifth-wheel plate. Such a fifth-wheel plate has an insertion area and a holding area. Via the insertion area, a pin, namely a kingpin, of a trailer vehicle can be inserted into the holding area of the fifth-wheel plate. The kingpin is then engaged, i.e. locked, in the holding area.

In addition to the towing connection, further connections, namely pneumatic and electrical connections, must be established between the towing vehicle and the trailer vehicle in order to enable various functions of a towing vehicle and trailer vehicle combination and to make the combination ready for driving.

Usually, two pneumatic connections are made, which are used to control the air brakes in the trailer vehicle from the towing vehicle. One of the pneumatic connections corresponds to a supply line for transferring compressed air from the towing vehicle to the trailer vehicle. The other pneumatic connection serves as a control line to control the brakes of the trailer vehicle depending on a control pressure specified by the towing vehicle.

Electrical connections, comprising two standardized plug-in connections, are also usually made between the towing vehicle and the trailer vehicle in order to control electrical systems of the trailer vehicle by the towing vehicle and, especially in the case of modern trailer vehicles, to exchange information between the trailer vehicle and the towing vehicle.

All these connections are usually established and released manually by a driver. In the field of fifth wheels, automated processes for establishing the towing connections for mechanical coupling are known in some cases. For example, from a driver's cabin, it is possible to engage or disengage the kingpin from the holding area of the fifth wheel. However, the other plug-in connections, namely the pneumatic and electrical connections between the towing vehicle and the trailer vehicle, must still be established manually by the driver.

Particularly in the field of autonomous driving, which is becoming increasingly relevant, it is desirable to implement the electrical and pneumatic connections between the towing vehicle and the trailer vehicle automatically, i.e. without manual intervention by a driver. However, such automatic connections are not trivial to implement.

Document US 2022/0332158 A1 discloses an object manipulator including a robot arm, carrying an adapter as connector. The robot arm is adapted to swing about a transverse axis of the vehicle for either storing the adapter in an unconnected state or swinging the adapter about the axis to the trailer to bring the adapter into a connected state. However, a special end effector with a first frame and a second frame, which are connected by a spring assembly, is needed to align the adapters of the towing vehicle and the trailer vehicle. However, the end effector is very sensitive to impurities and mechanical impacts.

Document US 2023/0015078 A1 discloses a further automatic coupling system. The system comprises a base plate mounted on the towing vehicle between a vehicle frame and a fifth wheel of the towing vehicle. An extendable arm is rotatably coupled to the base plate at a first point and configured to extend in response to relative movement of the towing vehicle and the trailer. A spring fixedly coupled to the base plate at a second point and coupled to the extendable arm, the spring being configured to exert a retractive force onto the extendable arm, and an alignment assembly rotatably coupled to the extendable arm and configured to move against an outer perimeter of the trailer. However, a connector assembly is provided on the outer perimeter of the trailer. The connector assembly is about 5 cm to about 10 cm high. Therefore, there is a risk that the alignment assembly colliding with the connector assembly of the trailer, during alignment, for example if the towing and trailer vehicle assembly is positioned in a dip or uneven terrain.

It is therefore the task of the present invention to overcome the problems of the prior art. In particular, it is intended to automate the establishment of connections between a towing vehicle and a trailer vehicle. In particular, while the connection is being established, it is intended to allow easy and robust alignment of the connectors. At least an alternative to the prior art shall be found.

The invention relates to a mounting box for being mounted on a trailer front as claimed in claim 1.

According to the first aspect of the invention, the invention is directed to a mounting box for being mounted on a front of a trailer vehicle, which is also referred to as trailer. The trailer vehicle may in particular be a semitrailer. The mounting box extends along a width, a height and a length. The mounting box thus extends along the width in a width direction, along the height in a height direction and along the length in a length direction.

The box is limited by a front surface. The front surface comprises a flat or curved alignment area. The alignment area may in particular be planar and/or without protrusions or recesses. In particular, the alignment area may be shaped in such a way that a roller can run over the surface of the alignment area or roll over the surface of the alignment area in the length direction while an axis of the roller performs a continuous change in position. The alignment area extends in the length direction of the mounting box and measures at least 1 m, at least 1,5 m or at least 2 m in the length direction. In particular, the alignment area may extend over the entire length of the box.

Furthermore, the mounting box comprises a connection section. The connection section comprises a plurality of box connectors fixedly mounted on the box for providing an electrical, pneumatic or hydraulic connection with corresponding truck connectors. Examples for connectors in the connection section are a connector for pneumatic supply, namely a red pneumatic trailer connector, a connector for pneumatic control, namely a yellow pneumatic trailer connector, a TT-Link connector, namely a Tractor-Trailer-Link connector, an Ethernet connector, an SAE J 560 connector, an ISO 12098 connector, ISO 1726 connector, ISO 1728 connector, ISO 3731 connector, ISO 1185 connector and an ISO 7638 connector.

The connection section is arranged above or below the alignment area in the height direction, so that the alignment surface provides a continuous surface which is uninterrupted by the box connectors.

In particular, when the mounting box is arranged on a trailer front, the longitudinal axis which extends in the length direction of the mounting box may extend along a transverse axis of the trailer front. The mounting box provides a length in the longitudinal axis or length direction that extends at least at the predominant section of the width, in particular the transverse direction, of the trailer. Furthermore, the mounting box comprises a front surface arranged to face away from the trailer front, in particular towards a connected truck when there is no articulation angle between the truck and the trailer. The front surface has an alignment area running along the length of the box in a transverse direction of the trailer.

Advantageously, the mounting box, when arranged on a trailer, enables automatically establishing one or more connections between a towing vehicle and a trailer vehicle through a device of the towing vehicle. The device of the towing vehicle serves for establishing a connection between truck connectors of the towing vehicle and box connectors of the mounting box, mounted to the trailer vehicle. Consequently, connecting or coupling the truck connector with the trailer connector establishes a connection.

The device of the towing vehicle for example may comprise an outrigger, which is connected to a fastening point of the truck. The outrigger extends along a longitudinal axis. Furthermore, the outrigger is arranged to pivot around the fastening point when connected to the fastening point. In particular, the outrigger may be arranged for pivoting within a plane, wherein the plane may be substantially horizontally oriented or inclined at an angle of less than 20 degrees or in particular less than 10 degrees with respect to a horizontal plane, for example a ground surface on which a truck with the device is positioned, or to a plane defined by the longitudinal and transverse axes of the truck.

Furthermore, the device of the towing vehicle may comprise for example an alignment device. The alignment device may be slidably mounted to the outrigger. Furthermore, the alignment device may arranged for sliding along both directions of the longitudinal axis of the outrigger. Consequently, the alignment device may comprise a slide connection with the outrigger. Furthermore, the alignment device may be arranged for aligning the outrigger to the trailer vehicle with a mounting box. In particular, the alignment device may comprise a crossmember slidably mounted at the outrigger, wherein the crossmember comprises a longitudinal axis, which is perpendicular to the longitudinal axis of the outrigger. The crossmember of the alignment device may comprise two ends in its longitudinal direction, wherein a roller may be arranged at each end. Each roller may be rotatable around a vertical axis. The rollers may in particular be arranged at or near outer parts of the ends of the crossmember. While the connection is being established, the rollers can move into the alignment area of the mounting box in the length direction of the mounting box.

Moreover, the device of the towing vehicle may comprise a gripper arm, which is slidably mounted to the outrigger. The gripper arm may be arranged for holding the truck connectors. Consequently, the gripper arm may comprise a further slide connection and thus be able to slide along the longitudinal axis of the outrigger.

Finally, the device of the towing vehicle may comprise a gripper arm drive for moving the gripper arm in both directions of the longitudinal axis of the outrigger.

Thus, the alignment device of the towing vehicle's device is arranged for contacting the alignment area of the front surface of the mounting box during the process of establishing a connection between the truck and the trailer. The alignment area of the front surface of the mounting box pushes the alignment device along the outrigger and at the same time serves to pivot the outrigger around the fastening point and thus aligns the outrigger with the trailer front side. In particular, after alignment of the outrigger through the alignment device, the longitudinal axis of the outrigger extends in a direction perpendicular to the front side of the trailer. Then the gripper arm drive moves the gripper arm, which holds the truck connectors towards the front side of the trailer until the truck connectors, for example male connectors, are connected with the box connectors, for example female connectors, of the mounting box. A connection between the towing vehicle and the trailer vehicle is thus established.

An easy alignment between the trailer and the truck with the mounting box for automatically establishing the connection is thus provided.

According to a first development, the box connectors are each connected to a mating connector by a line. The line is for example an electrical, pneumatic or hydraulic line. The mating connectors are each arranged for being connected to trailer connectors of the trailer. Thus, the mounting box is easy to install because the box connectors can simply be plugged into the trailer connectors when attaching the box to the trailer front.

According to a further development, the connection section is arranged in an interior of the box. The interior is limited at least by the front surface. The front surface furthermore comprises a main area. The main area extends on the entire length of the alignment area and/or the mounting box in the length direction of the mounting box. In the height direction, the main area lies above or below the alignment area. The main area comprises an opening in the area of the connection section for connecting the truck connectors to the box connectors through the opening. The box connectors are arranged in the interior so that they do not extend through the opening. In particular, each of the box connectors may end below an imaginary surface in the opening defined by the imaginary continued main area in the area of the opening.

In this way, the connectors are protected in the interior of the mounting box and damage is prevented, especially when aligning the alignment device during establishing a connection.

According to a further development, the alignment area or the alignment area and the main area are convex in the length direction. In particular, the maximum width of the mounting box may be provided in the center of the mounting box seen in the length direction. Improved alignment is thus possible.

According to a further development, the box comprises at least one or at least two mounting elements for mounting the box to the trailer front. The mounting box is thus prepared for attachment to a trailer and it is not necessary to weld the box to the trailer.

According to a further development, the at least one or two mounting elements each comprise a socket with a clamp or lock mechanism. The clamp or lock mechanism comprises a lever that can take at least one open position and one locked position. The clamp or lock mechanism is arranged for clamping or locking a fastener in the socket in the locked position of the lever and to release the fastener in the open position. Thus, the mounting box is detachable from and connectable to the trailer, if the trailer comprises fasteners. Thus a single mounting box can be used for a large number of trailers, as long as the trailers only need to be temporarily equipped for automatic coupling.

According to a further development, the alignment area is limited by side walls extending in parallel to the alignment area in the length direction. Thus, the alignment area is a bottom part of an area of the front surface, which is U-shaped, V-shaped or trapezoidal in cross sectional view of the mounting box in length direction. Thus, the side walls provide better guidance of the alignment device.

According to a further development, the box comprises an alignment recess arranged in the main area, preferable in the center of the length, below or above the opening and below or above the alignment area. The trailer recess may in particular be adapted to receive at least a part of an alignment pin arranged at the gripper arm. The trailer recess in particular may have the shape of a triangle or a cone.

Thus, an alignment pin of the gripper arm for further alignment of the gripper arm can enter the recess. In particular, the pin may have the form of a cone or a triangle. Consequently, according to a further development, the recess has a corresponding shape. The pin is in particular connected to the gripper arm in a spring-loaded manner. In particular, the alignment pin may extend beyond a connector plane of a truck connector when the truck connectors are hold by the gripper arm. The pin may thus in particular be a switchblade alignment device.

Consequently, when the gripper arm is moved by the gripper arm drive towards the trailer for connecting the truck connectors with the trailer connectors, the gripper arm is adjusted to the trailer precisely by the alignment pin. In particular, a fine adjustment by means of the pin takes place before the truck connectors reach the trailer connectors and thus, the connectors are fine-adjusted before a connection is established. More in particular, by the spring of the pin, the pin is pushed towards the gripper arm when alignment is completed in order to enable the gripper arm to push the truck connectors towards the trailer connectors completely for establishing a connection.

According to a further development, the connection section and the opening are arranged in a center section of the mounting box.

According to a further development, the length of the mounting box is below 2,55 m or below 2,5 m. The mounting box therefore does not protrude beyond the width of a conventional commercial trailer and can be used for commercial applications.

According to a second aspect, the invention comprises a system. The system comprising the mounting box according to the first aspect and at least one or two fasteners configured for being screwed or welded to a frame of the trailer and for being clamped or locked in a socket of the mounting box.

According to a further development, the system comprises a device for a towing vehicle. The device for the towing vehicle serves for establishing a connection between truck connectors of the towing vehicle and box connectors of the mounting box, mounted to the trailer vehicle. Consequently, connecting or coupling the truck connector with the trailer connector establishes a connection.

The device of the towing vehicle comprises for example an outrigger, which is connected to a fastening point of truck. The outrigger extends along a longitudinal axis. Furthermore, the outrigger is arranged, when connected to the fastening point, so as to pivot around the fastening point. In particular, the outrigger may be arranged for pivoting within a plane, which is substantially horizontally oriented or inclined at an angle of less than 20 degrees or in particular less than 10 degrees with respect to a horizontal plane, for example a ground surface on which a truck with the device is positioned, or to a plane defined by the longitudinal and transverse axis of the truck.

Furthermore, the device of the towing vehicle comprises for example an alignment device. The alignment device is slidably mounted to the outrigger. Furthermore, the alignment device is arranged for sliding along both directions of the longitudinal axis of the outrigger. Consequently, the alignment device comprises a slide connection with the outrigger. Furthermore, the alignment device may be arranged for aligning the outrigger to the trailer vehicle with a mounting box. In particular, the alignment device may comprise a crossmember slidably mounted at the outrigger, wherein the crossmember comprises a longitudinal axis, which is perpendicular to the longitudinal axis of the outrigger.

The crossmember of the alignment device may comprise two ends in its longitudinal direction, wherein a roller is arranged at each end. Each roller may be rotatable around a vertical axis. The rollers may in particular be arranged at or near outer parts of the ends of the crossmember. While the connection is being established, the rollers can move into the alignment area of the mounting box in the length direction of the mounting box.

Moreover, the device of the towing vehicle may comprise a gripper arm, which is slidably mounted to the outrigger. The gripper arm is arranged for holding the truck connectors. Consequently, the gripper arm comprises a further slide connection and can thus slide along the longitudinal axis of the outrigger.

Finally, the device of the towing vehicle may comprise a gripper arm drive for moving the gripper arm in both directions of the longitudinal axis of the outrigger.

According to a third aspect the invention comprises a trailer with a mounting box according to the first aspect or a system according to the second aspect.

According to a development of the trailer, the trailer comprises at least one or two fasteners being screwed or welded to a frame of the trailer, wherein the mounting box is mounted to the fasteners by corresponding mounting elements.

According to a third aspect the invention comprises a method for mounting a mounting box according to the first aspect. The method comprises to position the mounting box on the trailer front so that fasteners of the trailer are inserted into sockets of the mounting box. In the next step, a lever of the mounting box is moved from an open position to a closed position to lock or clamp the fasteners in the sockets. In a further optional step, mating connectors of the box are connected to trailer connectors of the trailer.

Further advantages, features and details of the invention result from the following description of the preferred embodiments as well as from the drawings, which show in:
- Fig. 1: a device of a towing vehicle of the system in a perspective view,
- Fig. 2: a side view of an outrigger of the device of the towing vehicle connected to a fifth wheel,
- Fig. 3: a trailer front with a mounting box in a front view,
- Fig. 4: a trailer front with a mounting box in a top view,
- Fig. 5: a device of a towing vehicle and a mounting box,
- Fig. 6: a fastener and a socket of the mounting box in side view,
- Fig. 7: a fastener and a socket of the mounting box in front view and
- Fig. 8: an alignment pin and a trailer recess.

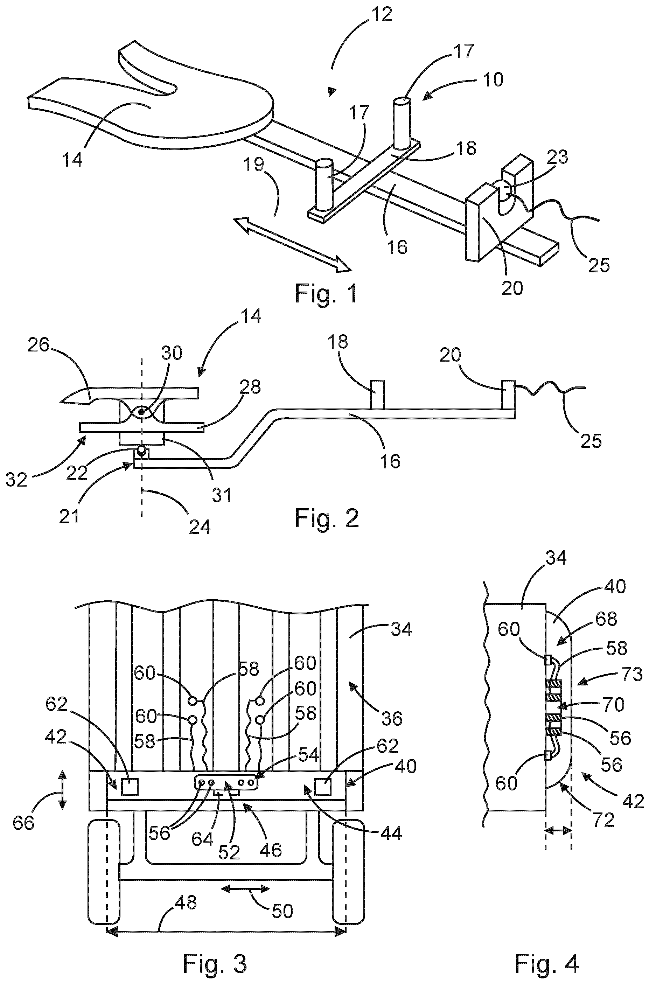

Fig. 1 discloses a device 10 of a towing vehicle for automatically establishing connections between the towing vehicle and a trailer vehicle. The device 10 is part of a system 12 comprising the device 10, which is mountable to a truck. The device 10 comprises an outrigger 16, an alignment device 18 and a gripper arm 20. The alignment device 18, comprising two rollers 17, and the gripper arm 20 are slidably mounted on the outrigger 16 to be slidable along a longitudinal axis 19 of the outrigger 16. The outrigger 16 is connected to a fifth wheel 14 at a fastening point 22 (cf. Fig. 2) and is thus arranged for pivoting around the fastening point 22. The gripper arm 20 holds a truck connector 23. The truck connectors 23 are electrically and/or pneumatically coupled to a truck through connection lines 25 (cf. Fig. 2).

Fig. 2 shows a side view of a connection 21 between the outrigger 16 and the fifth wheel 14. The outrigger 16 is arranged for pivoting around a vertical axis 24 at a fastening point 22. The vertical axis 24 is identical to the vertical axis 24 around which a kingpin of a trailer pivots while the towing vehicle and trailer vehicle drive through curves. The fifth wheel 14 comprises an upper part 26 and a lower part 28, wherein the lower part 28 and the upper part 26 are pivotally connected through a connection 30.

The outrigger 16 is connected on the bottom 32 of the upper part 26 by an adapter unit 31. Thus, when the upper part 26 pivots with respect to the lower part 28, the outrigger 16 follows the upper part 26.

Fig. 3 discloses a trailer 34 in a front view of a front 36 of the trailer 34. The trailer 34 comprises a mounting box 40 according to an embodiment of the invention. The mounting box 40 comprises a front surface 42 with a main area 44 and an alignment area 46. The mounting box 40 has a length 48 in a length direction 50. The mounting box 40 furthermore has an opening 52 in the main area 44 to an interior 54 of the mounting box 40. In the interior 54 box connectors 56 are fixedly mounted in a connection section 57. The box connectors 56 are configured for being connected with the truck connectors 23. Each of the box connectors 56 is connected by a line 58 to a corresponding mating connector 60. The mating connectors 60 are plugged into trailer connectors 60, which cannot be seen in this view. Furthermore, the main area 44 of the mounting box 40 comprises further openings 62 for mounting the mounting box 40 to the front 36 of the trailer 34. Moreover, a recess 64 is provided in the main area 44 for fine alignment of the gripper arm 20 and the truck connectors 23. The alignment area 46 of the mounting box 40 is below the main area 44 when viewed in a height direction 66 of the mounting box 40.

Fig. 4 shows a top view of the trailer 34 and the mounting box 40. The mounting box 40 has a top surface 68 with a top opening 70. The top opening 70 is provided for passing the lines 58 from the interior 54 of the mounting box 40 from the box connectors 56 to the trailer connectors 60. Moreover, it can be seen that the front surface 42 of the mounting box 40 has a convex shape 72. In its center 73, the box 40 has its largest width 75.

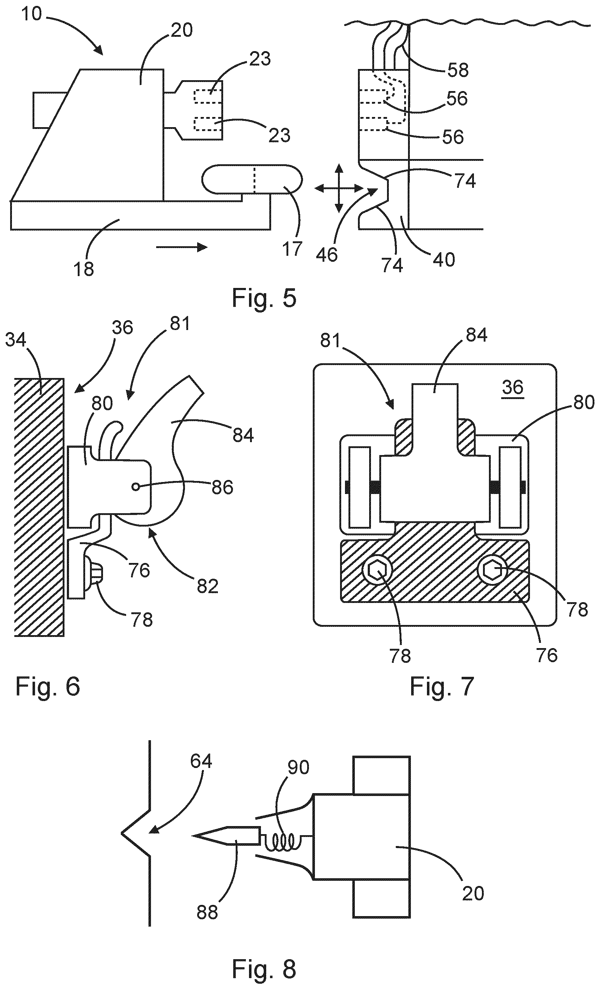

Fig. 5 discloses another embodiment of the device 10 of a towing system comprising an alignment device 18 with a roller 17 and a gripper arm 20, which holds truck connectors 23. Furthermore, the mounting box 40 is disclosed. The mounting box 40 comprises the alignment area 46, which is limited by side walls 74 for facilitating the alignment of the roller 17 and truck connectors 23 with the box connectors 56.

Fig. 6 discloses a part of the trailer 34, wherein on the trailer front 36 a fastener 76 is mounted by means of a screw 78. A socket 80 of a mounting element 81 comprising a clamp mechanism 82 with a lever 84 is disclosed. The lever 84 is in an open position and can be pivoted around a pivot axis 86 into a closed position for clamping the fastener 76 into the socket 80. The socket 80, the clamping mechanism 82 and the lever 84 are part of the mounting box 40, which is not shown for better visualization.

Fig. 7 discloses a front view to the front 36 of a trailer 34 to which a fastener 76 is mounted by means of a screw 78. Furthermore, the socket 80 with the lever 84 is disclosed. The socket 80 is, for example, fixed to the mounting box 40, for example to a rear surface of the mounting box 40. The lever 84 is, for example, movable through the further openings 62.

Fig. 8 discloses a part of the gripper arm 20, which comprises an alignment pin 88. The alignment pin 88 is arranged for aligning the gripper arm 20 in a recess 64. The alignment pin 88 is mounted to the gripper arm 20 by a spring 90 to move the alignment pin 88 backwards to enable establishing the connection between the truck connector 23 and the box connector 56.

### List of reference signs (Part of the description)

- 10: device of a towing vehicle
- 12: system
- 14: fifth wheel
- 16: outrigger
- 17: roller
- 18: alignment device
- 19: longitudinal axis
- 20: gripper arm
- 21: connection
- 22: fastening point
- 23: truck connectors
- 24: vertical axis
- 25: lines
- 26: upper part
- 28: lower part
- 30: connection
- 31: adapter unit
- 32: bottom
- 34: trailer
- 36: trailer front
- 40: mounting box
- 42: front surface
- 44: main area
- 46: alignment area
- 48: length
- 50: length direction
- 52: opening
- 54: interior
- 56: box connectors
- 57: connection section
- 58: line
- 60: mating connector
- 62: further openings
- 64: recess
- 66: height direction
- 68: top surface
- 70: top opening
- 72: convex shape
- 73: center
- 74: side walls
- 75: width
- 76: fastener
- 78: screw
- 80: socket
- 81: mounting element
- 82: clamp mechanism
- 84: lever
- 86: pivot axis

## Claims

1. Mounting box (40) for being mounted on a trailer front (36), wherein the mounting box (40) extends along a width, a height and a length (48) and is limited by a front surface (42) comprising a flat or curved alignment area (46), wherein the alignment area (46) extends along the length (48) of the mounting box (40) and measures at least 1 m, at least 1,5 m or at least 2 m in a length direction (50) defined by the length (48) of the mounting box (40),
wherein the mounting box (40) comprises a connection section (57), the connection section (57) comprising a plurality of box connectors (56) fixedly mounted on the mounting box (40) for providing an electrical, pneumatic or hydraulic connection with corresponding truck connectors (23),
wherein the connection section (57) is arranged above or below the alignment area (46) in a height direction (66) defined by the height of the mounting box, so that the alignment area (46) provides a continuous surface which is uninterrupted by the box connectors (56).

2. Mounting box (40) according to claim 1, wherein the box connectors (56) are each connected to a mating connector (60) by a line (58), wherein the mating connectors (60) are each arranged for being connected to trailer connectors of the trailer (34).

3. Mounting box (40) according to any of the preceding claims, wherein the connection section (57) is arranged in an interior (54) of the box and the front surface (42) comprises a main area (44), wherein the main area (44) extends along the entire length (48) of the alignment area (46) above or below the alignment area (46) in the height direction, wherein the main area (44) comprises an opening (52) in the area of the connection section (57) for connecting the truck connectors (23) to the box connectors (56) through the opening (52), wherein the box connectors (56) do not extend through the opening (52).

4. Mounting box (40) according to any of the preceding claims, wherein the alignment area (46) or the alignment area (46) and the main area (44) are convex in the length direction (50).

5. Mounting box (40) according to any of the preceding claims, wherein the mounting box (40) comprises at least one or at least two mounting elements (81) for mounting the mounting box (40) to the trailer front (36).

6. Mounting box (40) according to claim 5, wherein the at least one or at least two mounting elements (81) each comprise a socket (80) with a clamp or lock mechanism (82) comprising a lever (84) that can take at least one open position and one locked position, wherein the clamp or lock mechanism (82) is arranged for clamping or locking a fastener (76) in the socket (80) in the locked position of the lever (84) and to release the fastener (76) in the open position.

7. Mounting box (40) according to any of the preceding claims, wherein the alignment area (46) is limited by side walls extending in parallel to the alignment area (46) in the length direction (50), wherein in particular the alignment area (46) is a bottom part of an area of the front surface (42) which is U-shaped, V-shaped or trapezoidal in a cross sectional view of the mounting box (40) in the length direction (50).

8. Mounting box (40) according to any of the preceding claims, wherein the box comprises an alignment recess (64) arranged in the main area (44), in particular in a central position (73) along the length (48), below or above the opening (52) and below or above the alignment area (46).

9. Mounting box (40) according to any of the preceding claims, wherein the connection section (57) and the opening (52) is arranged in a or the central position (73) on the mounting box (40).

10. Mounting box (40) according to any of the preceding claims, wherein the length (48) of the mounting box (40) is below 2,55 m or below 2,5 m.

11. System (12) comprising the mounting box (40) according to any of the preceding claims and at least one or two fasteners (76) configured for being screwed or welded to a frame of the trailer (34).

12. Trailer (34) with a mounting box (40) according to any of claims 1 to 10.

13. Trailer (34) according to claim 12 wherein the trailer (34) comprises at least one or at least two fasteners (76) screwed or welded to a frame of the trailer (34), wherein the mounting box is mounted to the fasteners (76) by corresponding mounting elements.

14. Method for mounting a mounting box (40) according to any of claims 1 to 10 comprising:
- positioning the mounting box (40) on the trailer front (36) so that fasteners (76) of the trailer (34) are inserted into sockets (80) of the mounting box (40),
- moving a lever (82) of the mounting box (40) from an open position to a closed position and
- in particular connecting mating connectors (60) of the mounting box (40) to trailer connectors of the trailer (34).
